# EUROPÄISCHE PATENTSCHRIFT

(11) **EP 2 725 223 B1**
(45) Veröffentlichungstag und Bekanntmachung des Hinweises auf die Patenterteilung: **16.09.2020**
(21) Anmeldenummer: 13184407.8
(22) Anmeldetag: 13.09.2013
(51) Int. Cl.: F03D 9/00, F03D 80/80, F03D 9/25, F03D 13/20

(54) **Windkraftanlagengruppe**
Wind power plant group
Groupe d'installations éoliennes

(30) Priorität: 13.09.2012 DE 102012108577
(43) Veröffentlichungstag der Anmeldung: 30.04.2014
(73) Patentinhaber: 2-B Energy Holding B.V., 7556 PE Hengelo (NL)
(72) Erfinder: Jakobsson, Johan Mikael, Grants Pass, OR Oregon 97527 (US); Peels, Huibertus, 7631 HS Ootmarsum (NL)
(74) Vertreter: Bossmeyer, Jörg Peter

(56) Entgegenhaltungen:
- WO-A1-2008/039121
- WO-A1-2012/073228
- CA-A1- 2 462 065
- US-A1- 2011 140 447

## Beschreibung

Die Erfindung betrifft eine Windkraftanlagengruppe mit mehreren Windkraftanlagen, die jeweils einen durch Wind drehbaren Rotor, wenigstens einen durch diesen antreibbaren elektrischen Generator und eine den Rotor und den Generator tragende Tragstruktur umfassen, die sich in einer Hochrichtung erstreckt, wobei die Tragstruktur einer ersten der Windkraftanlagen aus mehreren übereinander angeordneten Tragstruktursegmenten zusammengesetzt ist, und einem elektrischen Gruppentransformator, der primärseitig mit den Generatoren der Windkraftanlagen elektrisch verbunden ist, wobei der Gruppentransformator an einem Zwischensegment befestigt ist, welches zwischen zwei benachbarten der Tragstruktursegmente der ersten Windkraftanlage angeordnet ist.

In einem eine Vielzahl von Windkraftanlagen umfassenden Windpark können die Windkraftanlagen in eine oder mehrere Gruppen eingeteilt werden, die jeweils mehrere der Windkraftanlagen umfassen. Jeder Gruppe kann ein Gruppentransformator zugeordnet sein, der primärseitig mit den Windkraftanlagen der jeweiligen Gruppe und sekundärseitig mit einem elektrischen Netz verbunden ist. Die Gruppentransformatoren sind dabei separat von den Windkraftanlagen der jeweiligen Gruppe angeordnet. Insbesondere bei Offshore-Windparks sind die Gruppentransformatoren auf separaten Plattformen montiert, was allerdings mit erheblichen Kosten verbunden.

Die CA 2 462 065 A1 offenbart eine Windkraftanlagengruppe mit mehreren im Boden verankerten Windkraftanlagen, die jeweils einen durch Wind drehbaren Rotor, einen durch diesen antreibbaren elektrischen Generator und einen den Rotor und den Generator tragenden Turm umfassen, der aus mehreren übereinander angeordneten Turmsegmenten zusammengesetzt ist, wobei in einem zwischen zwei Turmsegmenten angeordneten Turmsegment von einer der Windkraftanlagen ein elektrischer Transformator angeordnet ist, dem von den Windkraftanlagen erzeugter elektrischer Strom zugeführt wird.

Ausgehend hiervon liegt der Erfindung die Aufgabe zugrunde, eine Windkraftanlagengruppe der eingangs genannten Art derart weiterzubilden, dass die Kosten für die Montage des Gruppentransformators reduziert werden können.

Diese Aufgabe wird erfindungsgemäß mit einer Windkraftanlagengruppe nach Anspruch 1 gelöst. Bevorzugte Weiterbildungen der Erfindung sind in den Unteransprüchen und in der nachfolgenden Beschreibung gegeben.

Die erfindungsgemäße Windkraftanlagengruppe weist mehrere Windkraftanlagen, die jeweils einen durch Wind drehbaren Rotor, einen oder wenigstens einen durch diesen antreibbaren elektrischen Generator und eine den Rotor und den Generator tragende Tragstruktur umfassen, die sich in einer Hochrichtung erstreckt, wobei die Tragstruktur einer ersten der Windkraftanlagen aus mehreren übereinander angeordneten Tragstruktursegmenten zusammengesetzt ist, und einen elektrischen Gruppentransformator auf, der primärseitig mit den Generatoren der Windkraftanlagen elektrisch verbunden ist, wobei der Gruppentransformator an einem Zwischensegment befestigt ist, welches zwischen zwei benachbarten der Tragstruktursegmente der ersten Windkraftanlage angeordnet ist oder werden kann.

Gemäß der Erfindung ist der Gruppentransformator an der Tragstruktur der ersten Windkraftanlage vorgesehen oder vorsehbar. Hierdurch kann eine von den Windkraftanlagen getrennte Plattform für den Gruppentransformator eingespart werden. Die Kosten für das Herstellen des Zwischensegments sind in der Regel aber geringer als die Kosten für eine separate Transformatorplattform, insbesondere wenn diese auf See angeordnet ist, sodass die Kosten für die Montage des Gruppentransformators durch die Erfindung reduzierbar sind.

Die Hochrichtung verläuft bevorzugt vertikal oder näherungsweise vertikal. Insbesondere stehen die Tragstrukturen auf einem Boden auf. Vorzugsweise sind die Tragstrukturen im Boden verankert, beispielsweise mittels einer Gründung oder eines Fundaments. Vorteilhaft ist die Tragstruktur der ersten Windkraftanlage mit dem untersten der Tragstruktursegmente im Boden verankert. Die Windkraftanlagen können an Land angeordnet sein. In diesem Fall handelt es sich bei dem Boden insbesondere um den Erdboden. Erfindungsgemäß sind die Windkraftanlagen aber auf See angeordnet. In diesem Fall handelt es sich bei dem Boden insbesondere um den See- oder Meeresboden. Die Rotoren und die Generatoren der Windkraftanlagen sind dabei insbesondere oberhalb des Wasserspiegels angeordnet.

Gemäß einer Weiterbildung umfasst oder bildet die Tragstruktur jeder Windkraftanlage einen Turm oder Mast. Ferner kann die Tragstruktur jeder Windkraftanlage eine Gründung umfassen oder bilden, mittels welcher der Turm oder Mast der jeweiligen Windkraftanlage im Boden verankert ist. Alternativ ist es möglich, für jede Windkraftanlage eine von der jeweiligen Tragstruktur separate Gründung (oder Fundament) vorzusehen, die im Boden verankert und fest mit der Tragstruktur der jeweiligen Windkraftanlage verbunden ist. In diesem Fall sind die Tragstrukturen mittels der separaten Gründungen im Boden verankert. Die Gründungen können jeweils einen oder mehrere Gründungpfeiler umfassen, die insbesondere im Boden verankert sind.

Bevorzugt umfasst oder bildet die Tragstruktur der ersten Windkraftanlage einen Turm oder Mast. Insbesondere umfassen oder bilden die Tragstruktursegmente den Turm oder Mast der ersten Windkraftanlage. Beispielsweise bilden die oder mehrere der Tragstruktursegmente jeweils ein Turm- oder Mastsegment. Ferner können ein oder mehrere untere der Tragstruktursegmente, insbesondere das unterste Tragstruktursegment, eine Gründung umfassen oder bilden, mittels welcher der Turm oder Mast der ersten Windkraftanlage im Boden verankert ist. In diesem Fall umfassen oder bilden ein oder mehrere obere der Tragstruktursegmente bevorzugt den Turm oder Mast der ersten Windkraftanlage. Beispielsweise bilden das oder die oberen Tragstruktursegmente jeweils ein Turm- oder Mastsegment. Alternativ ist es möglich, eine von der Tragstruktur der ersten Windkraftanlage separate Gründung (oder Fundament) vorzusehen, die im Boden verankert und fest mit dem untersten Tragstruktursegment der ersten Windkraftanlage verbunden ist. Die Gründungen können jeweils einen oder mehrere Gründungpfeiler umfassen, die insbesondere im Boden verankert sind.

Gemäß einer Ausgestaltung verjüngen sich die Tragstrukturen der Windkraftanlagen jeweils nach oben. Insbesondere verjüngt sich die Tragstruktur der ersten Windkraftanlage nach oben. Vorteilhaft verläuft das Zwischensegment parallel oder näherungsweise parallel zur Hochachse. Vorzugsweise verjüngt sich wenigstens eines der benachbarten Tragstruktursegmente der ersten Windkraftanlage, insbesondere das obere dieser Tragstruktursegmente, nach oben. Bevorzugt verjüngt sich aber jedes der benachbarten Tragstruktursegmente der ersten Windkraftanlage nach oben. Jede Verjüngung kann dabei kontinuierlich oder lediglich bereichsweise erfolgen.

Die benachbarten Tragstruktursegmente der ersten Windkraftanlage sind vorteilhaft derart ausgebildet, dass sie auch ohne das Zwischensegment, vorzugsweise direkt, aufeinander passen und/oder miteinander verbindbar sind. Bevorzugt ist die Tragstruktur der ersten Windkraftanlage, insbesondere durch Aufeinandersetzen der Tragstruktursegmente, auch ohne das Zwischensegment montierbar, sodass dieses ein optionales Segment der Tragstruktur der ersten Windkraftanlage bildet. Insbesondere umfasst die Tragstruktur der ersten Windkraftanlage das Zwischensegment.

Bevorzugt weist ein oberes der benachbarten Tragstruktursegmente untere Anschlussbereiche auf. Ferner weist ein unteres der benachbarten Tragstruktursegmente bevorzugt obere Anschlussbereiche auf. Insbesondere sind die oberen Anschlussbereiche des unteren der benachbarten Tragstruktursegmente an die unteren Anschlussbereiche des oberen der benachbarten Tragstruktursegmente angeschlossen oder anschließbar.

Vorteilhaft weist das Zwischensegment untere Anschlussbereiche und obere Anschlussbereiche auf. Bevorzugt sind die unteren Anschlussbereiche des Zwischensegments an die oberen Anschlussbereiche des unteren der benachbarten Tragstruktursegmente angeschlossen oder anschließbar. Ferner sind die oberen Anschlussbereiche des Zwischensegments bevorzugt an die unteren Anschlussbereiche des oberen der benachbarten Tragstruktursegmente angeschlossen oder anschließbar.

Bevorzugt weist das obere der benachbarten Tragstruktursegmente eine untere Anschlussfläche auf, die insbesondere durch die unteren Anschlussbereiche dieses Tragstruktursegments definiert ist. Ferner weist das untere der benachbarten Tragstruktursegmente bevorzugt eine obere Anschlussfläche auf, die insbesondere durch die oberen Anschlussbereiche dieses Tragstruktursegments definiert ist. Vorteilhaft ist die untere Anschlussfläche des oberen der benachbarten Tragstruktursegmente an die obere Anschlussfläche des unteren der benachbarten Tragstruktursegmente angepasst. Insbesondere ist die untere Anschlussfläche des oberen der benachbarten Tragstruktursegmente an die obere Anschlussfläche des unteren der benachbarten Tragstruktursegmente angeschlossen oder anschließbar.

Vorteilhaft weist das Zwischensegment eine untere Anschlussfläche und eine obere Anschlussfläche auf. Insbesondere ist die untere Anschlussfläche des Zwischensegments durch die unteren Anschlussbereiche des Zwischensegments definiert. Ferner ist die obere Anschlussfläche des Zwischensegments insbesondere durch die oberen Anschlussbereiche des Zwischensegments definiert. Die obere und die untere Anschlussfläche des Zwischensegments weisen vorzugsweise die gleiche Größe oder näherungsweise die gleiche Größe auf.

Bevorzugt ist die untere Anschlussfläche des Zwischensegments an die obere Anschlussfläche des unteren der benachbarten Tragstruktursegmente angepasst. Insbesondere ist die untere Anschlussfläche des Zwischensegments an die obere Anschlussfläche des unteren der benachbarten Tragstruktursegmente angeschlossen oder anschließbar. Ferner ist die obere Anschlussfläche des Zwischensegments bevorzugt an die untere Anschlussfläche des oberen der benachbarten Tragstruktursegmente angepasst. Insbesondere ist die obere Anschlussfläche des Zwischensegments an die untere Anschlussfläche des oberen der benachbarten Tragstruktursegmente angeschlossen oder anschließbar. Vorteilhaft stimmt die obere Anschlussfläche des Zwischensegments mit der oberen Anschlussfläche des unteren der benachbarten Tragstruktursegmente überein. Ferner stimmt die untere Anschlussfläche des Zwischensegments vorteilhaft mit der unteren Anschlussfläche des oberen der benachbarten Tragstruktursegmente überein.

Bevorzugt weist das obere der benachbarten Tragstruktursegmente obere Anschlussbereiche auf. Ferner weist das untere der benachbarten Tragstruktursegmente bevorzugt untere Anschlussbereiche auf. Vorzugsweise weist das obere der benachbarten Tragstruktursegmente eine obere Anschlussfläche auf, die insbesondere durch die oberen Anschlussbereiche dieses Tragstruktursegments definiert ist. Ferner weist das untere der benachbarten Tragstruktursegmente bevorzugt eine untere Anschlussfläche auf, die insbesondere durch die unteren Anschlussbereiche dieses Tragstruktursegments definiert ist.

Vorteilhaft ist die obere Anschlussfläche von zumindest einem der benachbarten Tragstruktursegmente kleiner als die untere Anschlussfläche dieses Tragstruktursegments. Beispielsweise ist die obere Anschlussfläche des unteren der benachbarten Tragstruktursegmente kleiner als die untere Anschlussfläche dieses Tragstruktursegments. Ergänzend oder alternativ ist die obere Anschlussfläche des oberen der benachbarten Tragstruktursegmente beispielsweise kleiner als die untere Anschlussfläche dieses Tragstruktursegments. Vorzugsweise ist die obere Anschlussfläche von jedem der benachbarten Tragstruktursegmente kleiner als die untere Anschlussfläche des jeweiligen Tragstruktursegments.

Bevorzugt ist an die oberen Anschlussbereiche und/oder an die obere Anschlussfläche des oberen der benachbarten Tragstruktursegmente ein über den benachbarten Tragstruktursegmenten angeordnetes zusätzliches Tragstruktursegment der Tragstruktursegmente angeschlossen oder anschließbar. Bevorzugt ist an die unteren Anschlussbereiche und/oder an die untere Anschlussfläche des unteren der benachbarten Tragstruktursegmente ein unter den benachbarten Tragstruktursegmenten angeordnetes weiteres Tragstruktursegment der Tragstruktursegmente angeschlossen oder anschließbar.

Die Anschlussflächen können runde Fläche bilden. Vorzugsweise bildet jede der Anschlussflächen aber eine polygonale oder näherungsweise polygonale Fläche. Bevorzugt bildet jede der Anschlussflächen eine dreieckige oder näherungsweise dreieckige Fläche. Alternativ ist z.B. aber auch eine viereckige oder näherungsweise viereckige Fläche als Anschlussfläche möglich. Vorteilhaft ist jede der Anschlussflächen parallel zu einer Querschnittfläche der Tragstruktur und/oder des jeweiligen Tragstruktursegments.

Die Tragstrukturen der Windkraftanlagen können jeweils einen Rohrturm umfassen oder bilden. Bevorzugt umfassen oder bilden die Tragstrukturen der Windkraftanlagen aber jeweils eine Gitter- oder Fachwerkstruktur. Vorzugsweise umfassen oder bilden die Tragstrukturen der Windkraftanlagen jeweils einen Gitterturm oder -mast.

Die Tragstruktur der ersten Windkraftanlage kann einen Rohrturm umfassen oder bilden. Bevorzugt umfasst oder bildet die Tragstruktur der ersten Windkraftanlage aber eine Gitter- oder Fachwerkstruktur. Vorzugsweise umfasst oder bildet die Tragstruktur der ersten Windkraftanlage einen Gitterturm oder -mast. Vorteilhaft umfassen oder bilden eines oder mehrere oder alle der Tragstruktursegmente eine Gitter- oder Fachwerkstruktur. Insbesondere umfassen oder bilden die benachbarten Tragstruktursegmente oder zumindest eines von diesen eine Gitter- oder Fachwerkstruktur. Vorzugsweise umfasst oder bildet das obere der benachbarten Tragstruktursegmente eine Gitter- oder Fachwerkstruktur. Vorteilhaft umfasst oder bildet das Zwischensegment eine Gitter- oder Fachwerkstruktur. Beispielsweise umfassen oder bilden das oder die oberen Tragstruktursegmente die Gitter- oder Fachwerkstruktur. Ferner umfassen oder bilden das oder die unteren Tragstruktursegmente, insbesondere das unterste der Tragstruktursegmente, z.B. die Gründung und/oder den oder die Gründungspfeiler. Es ist aber auch möglich, dass die Gitter- oder Fachwerkstruktur und/oder der Gitterturm oder - mast durch alle Tragstruktursegmente gebildet ist. Das Zwischensegment bildet bevorzugt einen Teil der Gitter- oder Fachwerkstruktur und/oder ist in diese integriert. Tragstruktursegmente mit einer Gitter- oder Fachwerkstruktur bieten insbesondere den Vorteil einer einfacheren Transportierbarkeit, insbesondere bei Offshore-Windkraftanlagen. Das Zwischensegment kann eine Plattform umfassen, die insbesondere im Innern des Zwischensegments angeordnet ist.

Der Gruppentransformator kann an dem Zwischensegment vorinstalliert sein oder nachträglich an diesem montiert sein oder werden. Ferner kann der Gruppentransformator innerhalb des Zwischensegments angeordnet sein. Beispielsweise ist der Gruppentransformator auf der Plattform angeordnet. Erfindungsgemäß ist der Gruppentransformator aber an einer Außenseite des Zwischensegments angeordnet. Dies bietet insbesondere bei einer Offshore-Windkraftanlage den Vorteil der einfacheren Montierbarkeit und/oder Austauschbarkeit des Gruppentransformators.

Gemäß einer Weiterbildung sind an der Tragstruktur der ersten Windkraftanlage und/oder an dem Zwischensegment eine oder mehrere Zusatzeinrichtungen vorgesehen, die z.B. eine oder mehrere elektrische Einrichtungen bilden oder umfassen.

Insbesondere ist die oder sind die Zusatzeinrichtungen an dem Zwischensegment und/oder an der Tragstruktur der ersten Windkraftanlage befestigt. Beispielsweise ist die oder sind die Zusatzeinrichtungen an oder auf der Plattform und/oder außen an der Tragstruktur der ersten Windkraftanlage und/oder außen an dem Zwischensegment angeordnet. Ferner kann die oder können die Zusatzeinrichtungen um die Tragstruktur der ersten Windkraftanlage und/oder um das Zwischensegment herum angeordnet sein.

Gemäß einer Ausgestaltung umfassen die Zusatzeinrichtungen eine Brennkraftmaschine und einen elektrischen Hilfsgenerator, der mittels der Brennkraftmaschine antreibbar ist. Somit können die Windkraftanlagen und/oder elektrische Geräte der Windkraftanlagen bei einem Stromausfall und/oder Netzausfall von dem Hilfsgenerator mit elektrischer Energie versorgt werden, beispielsweise um einen Notbetrieb der Windkraftanlagen und/oder der elektrischen Geräte aufrechtzuerhalten. Bevorzugt sind die Brennkraftmaschine und der Hilfsgenerator an dem Zwischensegment vorgesehen, insbesondere auf der Plattform angeordnet. Die Windkraftanlagen und/oder deren elektrischen Geräte können durch den Hilfsgenerator gleichzeitig und/oder parallel mit elektrischer Energie versorgt werden. Insbesondere sind die Windkraftanlagen und/oder deren elektrischen Geräte, vorzugsweise windkraftanlagenweise, aber nacheinander und/oder sequentiell mit elektrischer Energie durch den Hilfsgenerator versorgbar, sodass dieser relativ klein ausgebildet werden kann. Die Brennkraftmaschine ist insbesondere ein Dieselmotor, sodass die Kombination aus Brennkraftmaschine und Hilfsgenerator auch als Dieselgenerator bezeichnet werden kann. Alternativ kann die Brennkraftmaschine aber auch ein Benzinmotor oder ein Gasmotor sein.

Die benachbarten Tragstruktursegmente und/oder das Zwischensegment können jeweils einen runden Querschnitt aufweisen. Gemäß einer Weiterbildung weisen die benachbarten Tragstruktursegmente und/oder das Zwischensegment aber jeweils einen polygonalen oder näherungsweise polygonalen Querschnitt auf. Bevorzugt weisen die benachbarten Tragstruktursegmente und/oder das Zwischensegment jeweils einen dreieckigen oder näherungsweise dreieckigen Querschnitt auf. Alternativ ist z.B. aber auch ein viereckiger oder näherungsweise viereckiger Querschnitt möglich.

Gemäß einer Ausgestaltung umfassen die benachbarten Tragstruktursegmente und/oder das Zwischensegment jeweils mehrere, insbesondere äußere, Tragelemente, wobei die Tragelemente der benachbarten Tragstruktursegmente bevorzugt unter Zwischenschaltung der Tragelemente des Zwischensegments fest miteinander verbindbar oder verbunden sind. Die Tragelemente von jedem der benachbarten Tragstruktursegmente und/oder des Zwischensegments liegen bevorzugt auf den Ecken der jeweiligen polygonalen oder näherungsweise polygonalen Querschnittsfläche oder bilden diese Ecken. Insbesondere umfassen die benachbarten Tragstruktursegmente und/oder das Zwischensegment jeweils die gleiche Anzahl an Tragelementen. Ist die Plattform vorhanden, so ist diese vorzugsweise zwischen den Tragelementen des Zwischensegments angeordnet und fest mit diesen Tragelementen verbunden. Vorzugsweise umfassen die Tragelemente die Anschlussbereiche. Die Tragelemente von wenigstens einem oder von jedem der benachbarten Tragstruktursegmente verlaufen bevorzugt geneigt zur Hochachse. Insbesondere verlaufen die Tragelemente des oberen der benachbarten Tragstruktursegmente geneigt zur Hochachse. Die Tragelemente des Zwischensegments verlaufen bevorzugt parallel oder näherungsweise parallel zur Hochachse. Vorteilhaft handelt es sich bei den Tragelementen um langgestreckte Körper.

Gemäß einer Weiterbildung sind die Tragelemente jeweils stab- oder rohrförmig ausgebildet. Beispielsweise sind die Tragelemente jeweils als Profil ausgebildet. Bevorzugt sind die Tragelemente jedes Tragstruktursegments durch Streben miteinander verbunden. Bei den Streben handelt es sich z.B. um schräg verlaufende Streben und/oder um Querstreben. Bevorzugt sind auch die Tragelemente des Zwischensegments durch Streben miteinander verbunden. Bei diesen Streben handelt es sich z.B. um schrägt verlaufende Streben und/oder um Querstreben. Gemäß einer Ausgestaltung weisen alle Tragstruktursegmente, die eine Gitter- oder Fachwerkstruktur bilden oder umfassen, Tragelemente auf, die insbesondere langgestreckte Körper bilden, die sich vorzugsweise jeweils in oder näherungsweise in Hochrichtung erstrecken. Jedes der Tragelemente kann dabei z.B. parallel zur Hochrichtung verlaufen oder gegenüber dieser geneigt sein.

Von den elektrischen Generatoren der Windkraftanlagen ist insbesondere jeweils eine elektrische Generatorausgangsspannung an den Gruppentransformator abgebbar, die vorzugsweise eine Wechselspannung, insbesondere eine dreiphasige oder mehrphasige Wechselspannung ist.

Vorteilhaft ist die Generatorausgangsspannung jeweils eine Mittelspannung. Mittels des Gruppentransformators sind die Generatorausgangsspannungen insbesondere in eine Gruppentransformatorausgangsspannung transformierbar, die vorzugsweise eine Wechselspannung, insbesondere eine dreiphasige oder mehrphasige Wechselspannung ist. Vorteilhaft ist die Gruppentransformatorausgangsspannung höher als die Generatorausgangsspannungen. Insbesondere ist die Gruppentransformatorausgangsspannung eine Hochspannung.

Der Gruppentransformator ist sekundärseitig bevorzugt mit einer elektrischen Ausgangsleitung und/oder mit einem elektrischen Netz elektrisch verbunden. Das elektrische Netz ist insbesondere ein lokales elektrisches Netz. Die elektrische Ausgangsleitung ist insbesondere eine Hochspannungsleitung und/oder das elektrische Netz ist insbesondere ein Hochspannungsnetz.

Bevorzugt umfasst die oder umfassen die Zusatzeinrichtungen wenigstens eine elektrische Steuereinrichtung, mit welcher die elektrischen Eigenschaften der Ausgangsleitung und/oder des elektrischen Netzes beeinflussbar und/oder steuerbar sind. Mit der elektrischen Steuereinrichtung ist z.B. eine Phasenkompensation in der Ausgangsleitung und/oder in dem elektrischen Netz durchführbar.

Gemäß einer Weiterbildung ist der Gruppentransformator, insbesondere mittels der elektrischen Ausgangsleitung und/oder des elektrischen Netzes, sekundärseitig mit einer Hochspannung-Gleichstromübertragungs-Vorrichtung elektrisch verbunden. Die Hochspannung-Gleichstromübertragungs-Vorrichtung umfasst bevorzugt einen Umrichter mit Gleichstromzwischenkreis, der insbesondere ein Gleichstromkabel umfasst. Insbesondere umfasst die Hochspannung-Gleichstromübertragungs-Vorrichtung und/oder der Umrichter einen ersten Stromrichter und einen zweiten Stromrichter, dessen Eingang durch eine Gleichstromverbindung an den Ausgang des ersten Stromrichters angeschlossen ist. Die Gleichstromverbindung ist bevorzugt durch den Gleichstromzwischenkreis gebildet. Insbesondere umfasst die Gleichstromverbindung das oder ein Gleichstromkabel. Bevorzugt ist die Gruppentransformatorausgangsspannung an die Hochspannung-Gleichstromübertragungs-Vorrichtung, insbesondere an den Eingang des ersten Stromrichters und/oder Umrichters, abgebbar. Bevorzugt ist der Gruppentransformator, insbesondere mittels der elektrischen Ausgangsleitung und/oder des elektrischen Netzes, sekundärseitig mit dem Eingang des ersten Stromrichters und/oder Umrichters elektrisch verbunden. Vorzugsweise ist der erste Stromrichter auf See angeordnet. Ferner ist der zweite Stromrichter vorzugsweise an Land angeordnet. Das Gleichstromkabel ist insbesondere ein Seekabel. Der erste Stromrichter ist vorzugsweise ein Gleichrichter. Ferner ist der zweite Stromrichter vorzugsweise ein Wechselrichter.

Bevorzugt ist der Gruppentransformator sekundärseitig, insbesondere unter Zwischenschaltung der Hochspannung-Gleichstromübertragungs-Vorrichtung und/oder wenigstens eines zusätzlichen Transformators, mit einem externen elektrischen Netz elektrisch verbunden. Das externe elektrische Netz ist vorzugsweise ein Wechselstromnetz. Insbesondere ist der Ausgang des zweiten Stromrichters und/oder des Umrichters elektrisch mit dem externen elektrischen Netz verbunden. Das externe elektrische Netz ist bevorzugt ein Verbundnetz. Vorteilhaft kann der erste Stromrichter auch als Wechselrichter arbeiten. Ferner kann der zweite Stromrichter vorteilhaft auch als Gleichrichter arbeiten. Somit sind die Windkraftanlagen und/oder deren elektrische Geräte bei Bedarf auch aus dem elektrischen Netz mit elektrischer Energie versorgbar.

Gemäß einer Ausgestaltung ist die Tragstruktur von einer zweiten oder wenigstens einer zweiten der Windkraftanlagen aus mehreren übereinander angeordneten Tragstruktursegmenten zusammengesetzt, wobei zwei benachbarte dieser Tragstruktursegmente derart ausgebildet sind, dass das Zwischensegment zwischen diesen Tragstruktursegmenten angeordnet werden kann. Bevorzugt ist das Zwischensegment zwischen den benachbarten Tragstruktursegmenten der ersten oder der zweiten Windkraftanlage angeordnet. Insbesondere sind dabei die benachbarten Tragstruktursegmente derjenigen Windkraftanlage, die nicht das Zwischensegment umfasst, direkt übereinander angeordnet. Vorzugsweise sind die benachbarten Tragstruktursegmente der zweiten oder wenigstens zweiten Windkraftanlage direkt übereinander angeordnet. Bevorzugt sind die benachbarten Tragstruktursegmente der zweiten Windkraftanlage gleich oder gleichartig zu den benachbarten Tragstruktursegmenten der ersten Windkraftanlage ausgebildet. Insbesondere sind die oberen der benachbarten Tragstruktursegmente der beiden Windkraftanlagen gleich oder gleichartig ausgebildet. Ferner sind insbesondere die unteren der benachbarten Tragstruktursegmente der beiden Windkraftanlagen gleich oder gleichartig ausgebildet.

Vorzugsweise ist die Tragstruktur von jeder der Windkraftanlagen aus mehreren übereinander angeordneten Tragstruktursegmenten zusammengesetzt, wobei zwei benachbarte der Tragstruktursegmente von jeder der Windkraftanlagen derart ausgebildet sind, dass das Zwischensegment zwischen diesen Tragstruktursegmenten angeordnet werden kann. Bevorzugt ist das Zwischensegment zwischen den benachbarten Tragstruktursegmenten von einer der Windkraftanlagen angeordnet, die vorzugsweise die erste Windkraftanlage bildet. Insbesondere sind die benachbarten Tragstruktursegmente derjenigen Windkraftanlage oder Windkraftanlagen, die nicht das Zwischensegment umfassen, jeweils direkt übereinander angeordnet. Vorteilhaft sind die benachbarten Tragstruktursegmente bei allen Windkraftanlagen gleich oder gleichartig ausgebildet. Insbesondere sind die oberen der benachbarten Tragstruktursegmente aller Windkraftanlagen gleich oder gleichartig ausgebildet. Ferner sind insbesondere die unteren der benachbarten Tragstruktursegmente bei allen Windkraftanlagen gleich oder gleichartig ausgebildet.

Die beiden vorstehend genannten Ausgestaltungen bieten insbesondere den Vorteil, dass beim Errichten der Windkraftanlagengruppe das Zwischensegment in die Tragstruktur von mehreren oder von jeder der Windkraftanlagen integriert werden kann. Das Zwischensegment kann somit in einer geeigneten Windkraftanlage installiert werden, ohne dass bei der Fertigung der Tragstruktursegmente darauf geachtet werden muss, in welcher der Windkraftanlagen das Zwischensegment tatsächlich installiert wird.

Die Erfindung betrifft ferner Windkraftanlagengruppe mit mehreren Windkraftanlagen, die jeweils einen durch Wind drehbaren Rotor, einen oder wenigstens einen durch diesen antreibbaren elektrischen Generator und eine den Rotor und den Generator tragende Tragstruktur umfassen, die sich in einer Hochrichtung erstreckt, wobei die Tragstrukturen von wenigstens zwei der Windkraftanlagen jeweils aus mehreren übereinander angeordneten Tragstruktursegmenten zusammengesetzt sind, und einem elektrischen Gruppentransformator, der primärseitig mit den Generatoren der Windkraftanlagen elektrisch verbunden ist, wobei der Gruppentransformator an einem Zwischensegment befestigt ist, welches zwischen zwei benachbarten der Tragstruktursegmente von jeder der wenigstens zwei Windkraftanlagen angeordnet werden kann, und wobei das Zwischensegment zwischen den benachbarten Tragstruktursegmenten von einer der wenigstens zwei Windkraftanlagen angeordnet ist, die vorzugsweise eine erste oder die erste Windkraftanlage bildet. Diese Windkraftanlagengruppe kann gemäß allen erläuterten Ausgestaltungen weitergebildet sein. Insbesondere sind die benachbarten Tragstruktursegmente derjenigen der wenigstens zwei Windkraftanlagen, die nicht das Zwischensegment umfasst, direkt übereinander angeordnet. Vorteilhaft sind die benachbarten Tragstruktursegmente der wenigstens zwei Windkraftanlagen gleich oder gleichartig ausgebildet. Insbesondere sind die oberen der benachbarten Tragstruktursegmente der wenigstens zwei Windkraftanlagen gleich oder gleichartig ausgebildet. Ferner sind insbesondere die unteren der benachbarten Tragstruktursegmente der wenigstens zwei Windkraftanlagen gleich oder gleichartig ausgebildet.

Die Erfindung wird nachfolgend anhand einer bevorzugten Ausführungsform unter Bezugnahme auf die Zeichnung beschrieben. In der Zeichnung zeigen:
- Fig. 1: eine schematische Vorderansicht einer Windkraftanlagengruppe gemäß einer Ausführungsform der Erfindung,
- Fig. 2: eine schematische Seitenansicht der mittleren Windkraftanlage nach Fig. 1,
- Fig. 3: eine perspektivische Ansicht eines aus Fig. 2 ersichtlichen Zwischensegments,
- Fig. 4: eine Seitenansicht des Zwischensegments,
- Fig. 5: eine Draufsicht auf das Zwischensegment,
- Fig. 6: eine perspektivische Ansicht der Tragstruktur der Windkraftanlage nach Fig. 2,
- Fig. 7: eine perspektivische Ansicht einer Tragstruktur von einer der anderen Windkraftanlagen nach Fig. 1 und
- Fig. 8: ein schematisches elektrisches Schaltbild der Windkraftanlagengruppe nach Fig. 1.

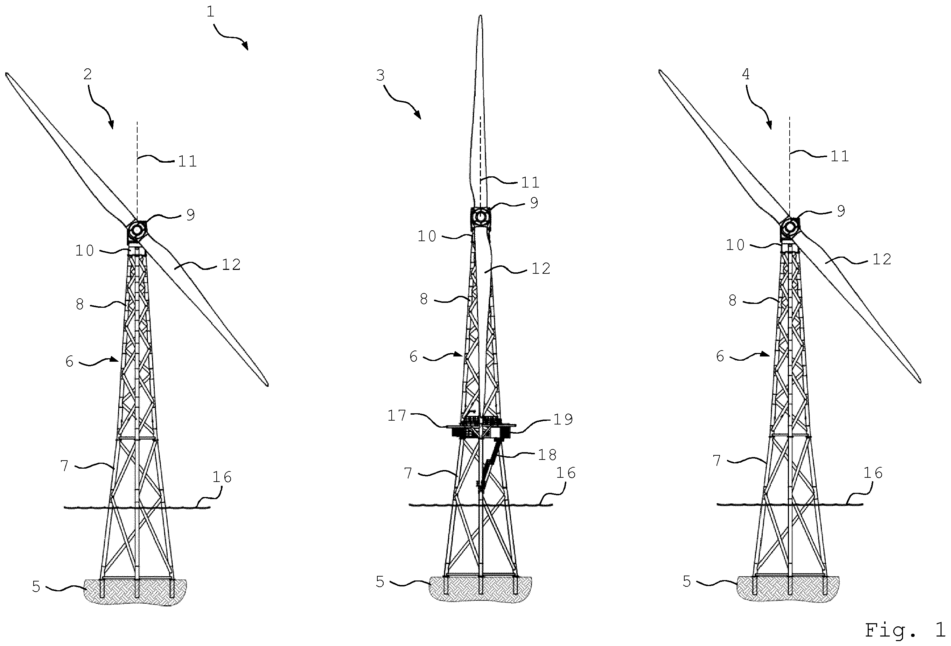

Aus Fig. 1 ist eine schematische Vorderansicht einer Windkraftanlagengruppe 1 gemäß einer Ausführungsform der Erfindung ersichtlich, wobei die Windkraftanlagengruppe 1 mehrere Windkraftanlagen 2, 3 und 4 umfasst, die auf See angeordnet und im Meeresboden 5 verankert sind. Jede der Windkraftanlagen 2, 3 und 4 umfasst eine Tragstruktur 6 in Form eines Gitterturms, die jeweils zwei Tragstruktursegmente 7 und 8 umfasst. Das untere Tragstruktursegment 7 jeder Windkraftanlage 2, 3 und 4 ist dabei im Boden 5 verankert und trägt das jeweilige obere Tragstruktursegment 8. Jede der Windkraftanlagen 2, 3 und 4 umfasst einen Maschinenträger 9, der über ein Azimutlager 10 um eine Hochachse 11 drehbar auf dem oberen Tragstruktursegment 8 gelagert ist. Das obere Tragstruktursegment 8 jeder Windkraftanlage 2, 3 und 4 trägt somit den jeweiligen Maschinenträger 9. Die Hochachse 11 jeder Windkraftanlage 2, 3 und 4 verläuft insbesondere vertikal oder näherungsweise vertikal zum Boden 5 und bildet eine Längsachse der jeweiligen Tragstruktur.

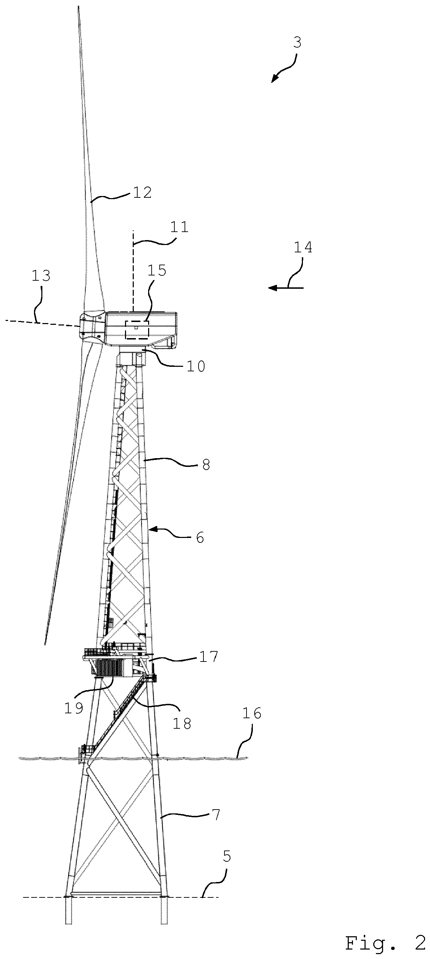

An dem Maschinenträger 9 jeder Windkraftanlage ist ein Rotor 12 um eine Rotorachse 13 (siehe Fig. 2) drehbar gelagert, die quer oder näherungsweise quer zur Hochachse 11 verläuft. Vorzugsweise ist die Rotorachse 13 aber geringfügig gegenüber der Horizontalen geneigt. Die Rotoren 12 werden durch Wind 14 (siehe Fig. 2) um ihre jeweilige Rotorachse 13 gedreht. Ferner trägt der Maschinenträger 9 jeder Windkraftanlage 2, 3 und 4 einen elektrischen Generator 15 (siehe Fig. 2), der von dem jeweiligen Rotor 12 angetrieben wird.

Das untere Tragstruktursegment 7 jeder Windkraftanlage 2, 3 und 4 liegt teilweise unter und teilweise über dem Wasserspiegel 16, wobei das obere Ende jedes unteren Tragstruktursegments 7 oberhalb des Wasserspiegels 16 angeordnet ist. Die unteren Tragstruktursegmente 7 aller Windkraftanlagen sind gleich ausgebildet. Ferner sind die oberen Tragstruktursegmente 8 aller Windkraftanlagen gleich ausgebildet. Bei den Windkraftanlagen 2 und 4 steht das obere Tragstruktursegment 8 direkt auf dem unteren Tragstruktursegment 7 auf und ist fest mit diesem verbunden. Bei der Windkraftanlage 3 ist zwischen dem unteren Tragstruktursegment 7 und dem oberen Tragstruktursegment 8 hingegen ein Zwischensegment 17 angeordnet ist, welches sowohl mit dem unteren als auch mit dem oberen Tragstruktursegment fest verbunden ist. Ferner ist an dem unteren Tragstruktursegment 7 der Windkraftanlage 3 noch eine Treppe 18 vorgesehen, die sich von etwa dem Niveau des Wasserspiegels 16 bis hin zu dem Zwischensegment 17 erstreckt. Eine solche Treppe kann auch an den unteren Tragstruktursegmenten der anderen Windkraftanlagen 2 und 4 vorgesehen sein und sich bei diesen bis hin zu der Schnittstelle zwischen dem unteren und dem oberen Tragstruktursegment erstrecken. Bis auf das Zwischensegment 17 sind somit die Tragstrukturen 6 aller Windkraftanlagen 2, 3 und 4 gleich oder näherungsweise gleich ausgebildet.

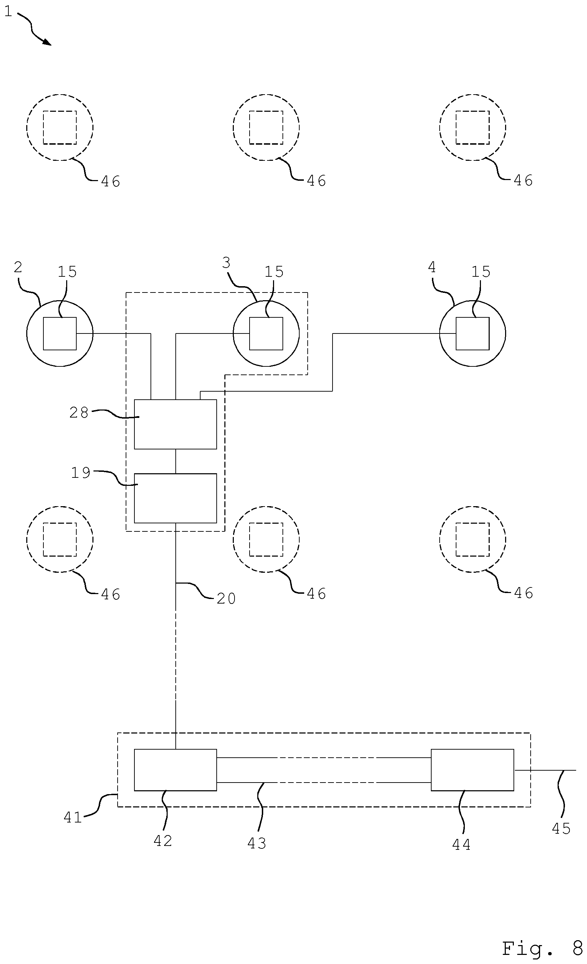

Aus Fig. 2 ist eine schematische Seitenansicht der Windkraftanlage 3 ersichtlich, deren Zwischensegment 17 einen Gruppentransformator 19 trägt, der an einer Außenseite des Zwischensegments 17 angeordnet ist. Der Gruppentransformator 19 ist primärseitig mit jedem der Generatoren 15 elektrisch verbunden. Ferner ist der Gruppentransformator 19 sekundärseitig mit einer elektrischen Ausgangsleitung 20 (siehe Fig. 8) oder einem elektrischen Netz elektrisch verbunden. Die Ausgangsleitung 20 kann auch Teil dieses elektrischen Netzes sein.

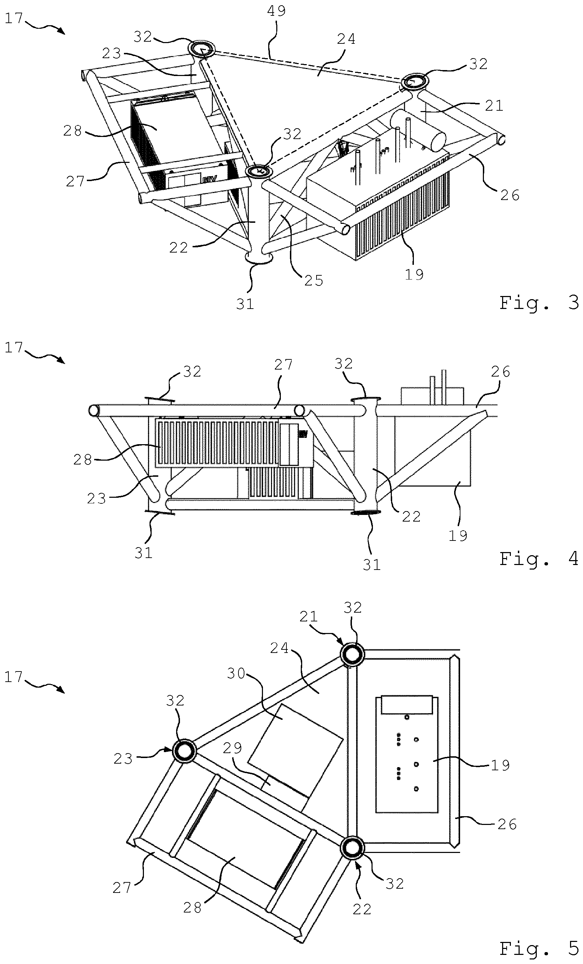

Aus Fig. 3 ist eine perspektivische Ansicht des Zwischensegments 17, aus Fig. 4 eine Seitenansicht des Zwischensegments 17 und aus Fig. 5 eine Draufsicht auf das Zwischensegment 17 ersichtlich. Das Zwischensegment 17 umfasst drei Tragelemente 21, 22 und 23, die jeweils als Rohr ausgebildet sind. Die Tragelemente 21, 22 und 23 definieren die Ecken einer dreieckigen Querschnittsfläche des Zwischensegments 17. Zwischen den Tragelementen 21, 22 und 23 ist eine Plattform 24 angeordnet und starr mit den Tragelementen 21, 22 und 23 verbunden. Ferner sind die Tragelemente 21, 22 und 23 über Streben 25 starr miteinander verbunden. Die Tragelemente 21, 22 und 23 sowie die Streben 25 bilden somit eine Gitter- oder Fachwerkstruktur des Zwischensegments 17. An einer der Außenseiten des Zwischensegments 17 ist der Gruppentransformator 19 an einer Halterung 26 befestigt. Ferner ist an einer anderen Außenseite des Zwischensegments 17 eine Halterung 27 vorgesehen, welche eine elektrische Anschlussvorrichtung 28 trägt, an welche die Generatoren 15 der Windkraftanlagen 2, 3 und 4 elektrisch angeschlossen sind. Die Anschlussvorrichtung 28 ist elektrisch mit der Primärseite des Gruppentransformators 19 verbunden, sodass dieser unter Zwischenschaltung der Anschlussvorrichtung 28 primärseitig mit den Generatoren 15 der Windkraftanlagen 2, 3 und 4 elektrisch verbunden ist. Ferner sind Hilfs- oder Zusatzeinrichtungen 29 und 30 auf der Plattform 24 angeordnet, was allerdings lediglich in Fig. 5 gezeigt ist.

Die Hilfseinrichtungen 29 und 30 umfassen z.B. einen Dieselgenerator und/oder eine elektrische Einrichtung zur Phasenkompensation und/oder Batterien und/oder Niederspannungsvorrichtungen, wie z.B. eine Beleuchtung und/oder ein SCADA-System.

Jedes der Tragelemente 21, 22 und 23 umfasst einen unteren Anschlussbereich 31 und einen oberen Anschlussbereich 32. Die unteren Anschlussbereiche 31 definieren eine dreieckige untere Anschlussfläche, und die oberen Anschlussbereiche 32 definieren eine dreieckige obere Anschlussfläche 49 des Zwischensegments 17, die gestrichelt angedeutet ist.

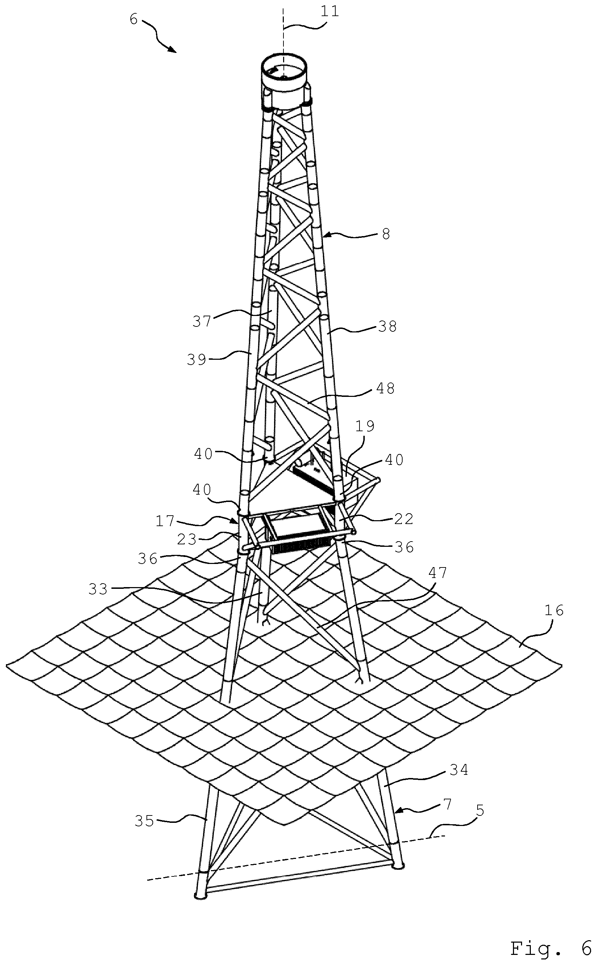

Aus Fig. 6 ist eine perspektivische Ansicht der Tragstruktur 6 der Windkraftanlage 3 ersichtlich, wobei das untere Tragstruktursegment 7 Tragelemente 33, 34 und 35 aufweist, die jeweils als Rohr ausgebildet und mit einem oberen Anschlussbereich 36 versehen sind. Die Tragelemente 33, 34 und 35 sind dabei über Streben 47 starr miteinander verbunden. Die Tragelemente 33, 34 und 35 sowie die Streben 47 bilden somit eine Gitter- oder Fachwerkstruktur des Tragstruktursegments 7. Ferner sind die unteren Anschlussbereiche 31 des Zwischensegments 17 fest mit den oberen Anschlussbereichen 36 des unteren Tragstruktursegments 7 verbunden. Das obere Tragstruktursegment 8 umfasst Tragelemente 37, 38 und 39, die jeweils als Rohr ausgebildet und mit einem unteren Anschlussbereich 40 versehen sind. Die Tragelemente 37, 38 und 39 sind dabei über Streben 48 starr miteinander verbunden. Die Tragelemente 37, 38 und 39 sowie die Streben 48 bilden somit eine Gitter- oder Fachwerkstruktur des Tragstruktursegments 8. Ferner sind die oberen Anschlussbereiche 32 des Zwischensegments 17 fest mit den unteren Anschlussbereichen 40 des oberen Tragstruktursegments 8 verbunden. Wie ersichtlich, verjüngen sich die Tragstruktursegmente 7 und 8 jeweils mit zunehmendem Abstand zum Boden 5 in Richtung der Hochachse 11, wohingegen die Streben 21, 22 und 23 des Zwischensegments 17 parallel oder näherungsweise parallel zur Hochachse 11 verlaufen. Die Tragelemente 33, 34 und 35 des unteren Tragstruktursegments 7 sowie die Tragelemente 37, 38 und 39 des oberen Tragstruktursegments 8 verlaufen somit gegenüber der Hochachse 11 geneigt.

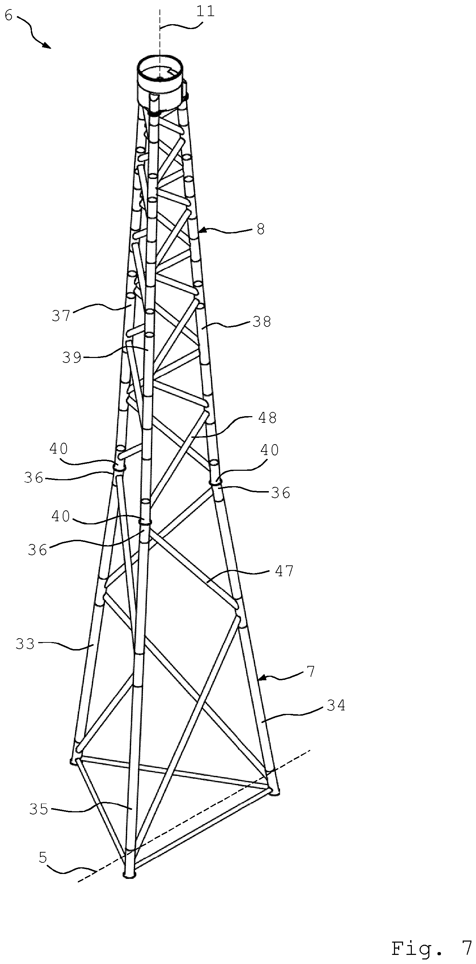

Das untere und das obere Tragstruktursegment 7 und 8 sind derart ausgebildet, dass auch ohne das Zwischensegment 17 die oberen Anschlussbereiche 36 des unteren Tragstruktursegments 7 mit den unteren Anschlussbereichen 40 des oberen Tragstruktursegments 8 fest verbunden werden können. Dies ist aus Fig. 7 ersichtlich, die eine Tragstruktur 6 ohne Zwischensegment zeigt, wie sie bei den Windkraftanlagen 2 und 4 eingesetzt ist. Bei dieser Tragstruktur 6 sind die oberen Anschlussbereiche 36 des unteren Tragstruktursegments 7 direkt mit den unteren Anschlussbereichen 40 des oberen Tragstruktursegments 8 fest verbunden.

Aus Fig. 8 ist ein schematisches elektrisches Schaltbild der Windkraftanlagengruppe 1 ersichtlich, wonach die elektrischen Generatoren 15 der Windkraftanlagen 2, 3 und 4 unter Zwischenschaltung der Anschlussvorrichtung 28 elektrisch an die Primärseite des Gruppentransformators 19 angeschlossen sind. Die Sekundärseite des Gruppentransformators 19 ist über eine elektrische Ausgangsleitung 20 elektrisch mit einer Hochspannungs-Gleichstrom-Übertragungs-Vorrichtung (HGÜ) 41 verbunden. Die HGÜ 41 umfasst einen Gleichrichter 42, der eingangsseitig mit der elektrischen Ausgangsleitung 20 und ausgangsseitig mit einem Gleichstromkabel 43 verbunden ist. Ferner umfasst die HGÜ 41 einen Wechselrichter 44, der eingangsseitig mit dem Gleichstromkabel 43 und ausgangsseitig mit einem elektrischen Verbundnetz 45 verbunden ist. Der Gleichrichter 41 ist dabei auf See angeordnet, wohingegen der Wechselrichter 44 an Land angeordnet ist. Bevorzugt soll ferner eine elektrische Speisung der Windkraftanlagen der Windkraftanlagengruppe 1 durch das Verbundnetz 45 möglich sein. Vorteilhat kann somit der Wechselrichter 44 auch als Gleichrichter und der Gleichrichter 42 auch als Wechselrichter arbeiten.

In Fig. 8 sind zusätzliche Windkraftanlagen 46 dargestellt, die gemäß einer Abwandlung der Ausführungsform der Windkraftanlagengruppe 1 zuzurechnen sind. Gemäß der Abwandlung umfasst die Windkraftanlagengruppe 1 somit neun Windkraftanlagen. Ferner können zusätzliche Windkraftanlagengruppen vorhanden sein, die gleichartig zu der Windkraftanlagengruppe 1 ausgebildet und elektrisch mit der HGÜ 41 verbunden sind.

### Bezugszeichenliste

- 1: Windkraftanlagengruppe
- 2: Windkraftanlage
- 3: Windkraftanlage
- 4: Windkraftanlage
- 5: Boden
- 6: Tragstruktur
- 7: unteres Tragstruktursegment
- 8: oberes Tragstruktursegment
- 9: Maschinenträger
- 10: Azimutlager
- 11: Hochachse
- 12: Rotor
- 13: Rotorachse
- 14: Wind
- 15: elektrischer Generator
- 16: Wasserspiegel
- 17: Zwischensegment
- 18: Treppe
- 19: Gruppentransformator
- 20: elektrische Ausgangsleitung / elektrisches Netz
- 21: Tragelement des Zwischensegments
- 22: Tragelement des Zwischensegments
- 23: Tragelement des Zwischensegments
- 24: Plattform des Zwischensegments
- 25: Strebe des Zwischensegments
- 26: Halterung
- 27: Halterung
- 28: Anschlussvorrichtung
- 29: Hilfseinrichtung
- 30: Hilfseinrichtung
- 31: unterer Anschlussbereich des Zwischensegments
- 32: oberer Anschlussbereich des Zwischensegments
- 33: Tragelement des unteren Tragstruktursegments
- 34: Tragelement des unteren Tragstruktursegments
- 35: Tragelement des unteren Tragstruktursegments
- 36: oberer Anschlussbereich des unteren Tragstruktursegments
- 37: Tragelement des oberen Tragstruktursegments
- 38: Tragelement des oberen Tragstruktursegments
- 39: Tragelement des oberen Tragstruktursegments
- 40: unterer Anschlussbereich des oberen Tragstruktursegments
- 41: Hochspannungs-Gleichstrom-Übertragungs-Vorrichtung
- 42: Gleichrichter
- 43: Gleichstromkabel
- 44: Wechselrichter
- 45: elektrisches Netz
- 46: Windkraftanlage
- 47: Strebe des unteren Tragstruktursegments
- 48: Strebe des oberen Tragstruktursegments
- 49: obere Anschlussfläche des Zwischensegments

## Patentansprüche

1. Windkraftanlagengruppe mit mehreren Windkraftanlagen (2, 3, 4), die jeweils einen durch Wind drehbaren Rotor (12), wenigstens einen durch diesen antreibbaren elektrischen Generator (15) und eine den Rotor (12) und den Generator (15) tragende Tragstruktur (6) umfassen, die sich in einer Hochrichtung (11) erstreckt, wobei die Tragstruktur (6) einer ersten der Windkraftanlagen (3) aus mehreren übereinander angeordneten Tragstruktursegmenten (7, 8) zusammengesetzt ist, und einem elektrischen Gruppentransformator (19), der primärseitig mit den Generatoren (15) der Windkraftanlagen (2, 3, 4) elektrisch verbunden ist, wobei der Gruppentransformator (19) an einem Zwischensegment (17) befestigt ist, welches zwischen zwei benachbarten der Tragstruktursegmente (7, 8) der ersten Windkraftanlage (3) angeordnet ist, **dadurch gekennzeichnet, dass** die Windkraftanlagen (2, 3, 4) auf See angeordnet sind und der Gruppentransformator (19) an einer Außenseite des Zwischensegments (17) angeordnet ist.

2. Windkraftanlagengruppe nach Anspruch 1, **dadurch gekennzeichnet, dass** die benachbarten Tragstruktursegmente (7, 8) der ersten Windkraftanlage (3) derart ausgebildet sind, dass sie ohne das Zwischensegment (17) direkt miteinander verbindbar sind.

3. Windkraftanlagengruppe nach Anspruch 2, **dadurch gekennzeichnet, dass** die benachbarten Tragstruktursegmente (7, 8) der ersten Windkraftanlage (3) sich jeweils nach oben verjüngen.

4. Windkraftanlagengruppe nach Anspruch 3, **dadurch gekennzeichnet, dass** das Zwischensegment (17) parallel zur Hochachse (11) verläuft.

5. Windkraftanlagengruppe nach einem der vorangehenden Ansprüche, **dadurch gekennzeichnet, dass** die Tragstruktur (6) der ersten Windkraftanlage (3) und das Zwischensegment (17) jeweils eine Gitter- oder Fachwerkstruktur umfassen.

6. Windkraftanlagengruppe nach einem der vorangehenden Ansprüche, **dadurch gekennzeichnet, dass** die benachbarten Tragstruktursegmente (7, 8) der ersten Windkraftanlage (3) und das Zwischensegment (17) jeweils einen polygonalen Querschnitt aufweisen.

7. Windkraftanlagengruppe nach einem der vorangehenden Ansprüche, **dadurch gekennzeichnet, dass** die benachbarten Tragstruktursegmente (7, 8) der ersten Windkraftanlage (3) und das Zwischensegment (17) jeweils mehrere Tragelemente (21, 22, 23; 33, 34, 35; 37, 38, 39) umfassen, wobei die Tragelemente (33, 34, 35; 37, 38, 39) der benachbarten Tragstruktursegmente (7, 8) unter Zwischenschaltung der Tragelemente (21, 22, 23) des Zwischensegments (17) fest miteinander verbunden sind.

8. Windkraftanlagengruppe nach Anspruch 7, **dadurch gekennzeichnet, dass** die Tragelemente (21, 22, 23; 33, 34, 35; 37, 38, 29) jeweils stab- oder rohrförmig ausgebildet sind.

9. Windkraftanlagengruppe nach Anspruch 7 oder 8, **dadurch gekennzeichnet, dass** die Tragelemente (33, 34, 35; 37, 38, 29) der benachbarten Tragstruktursegmente (7, 8) gegenüber der Hochsachse (11) geneigt verlaufen und die Tragelemente (21, 22, 23) des Zwischensegments (17) parallel zur Hochachse (11) verlaufen.

10. Windkraftanlagengruppe nach einem der vorangehenden Ansprüche, **dadurch gekennzeichnet, dass** der Gruppentransformator (19) sekundärseitig mit einer Hochspannungs-Gleichstrom-Übertragungs-Vorrichtung (41) elektrisch verbunden ist.

11. Windkraftanlagengruppe nach einem der vorangehenden Ansprüche, **dadurch gekennzeichnet, dass** die Tragstruktur (6) von wenigstens einer zweiten der Windkraftanlagen (2) aus mehreren übereinander angeordneten Tragstruktursegmenten (7, 8) zusammengesetzt ist, wobei zwei benachbarte dieser Tragstruktursegmente (7, 8) derart ausgebildet sind, dass das Zwischensegment (17) zwischen diesen Tragstruktursegmenten (7, 8) angeordnet werden kann.

12. Windkraftanlagengruppe nach Anspruch 11, **dadurch gekennzeichnet, dass** die benachbarten Tragstruktursegmente (7, 8) der zweiten Windkraftanlage (2) gleichartig zu den benachbarten Tragstruktursegmente (7, 8) der ersten Windkraftanlage (3) ausgebildet sind.

13. Windkraftanlagengruppe nach Anspruch 11 oder 12, **dadurch gekennzeichnet, dass** die benachbarten Tragstruktursegmente (7, 8) der zweiten Windkraftanlage (2) direkt übereinander angeordnet sind.

## Claims

1. Wind turbine group having a plurality of wind turbines (2, 3, 4) which each comprise a rotor (12) which can be rotated by wind, at least one electrical generator (15) which can be driven thereby and a carrier structure (6) which carries the rotor (12) and the generator (15) and which extends in a vertical direction (11), wherein the carrier structure (6) of a first of the wind turbines (3) is composed of a plurality of carrier structure segments (7, 8) which are arranged one above the other, and having an electrical group transformer (19) which is electrically connected at the primary side to the generators (15) of the wind turbines (2, 3, 4), wherein the group transformer (19) is secured to an intermediate segment (17) which is arranged between two adjacent segments of the carrier structure segments (7, 8) of the first wind turbine (3), **characterised in that** the wind turbines (2, 3, 4) are arranged at sea and the group transformer (19) is arranged at an outer side of the intermediate segment (17).

2. Wind turbine group according to claim 1, **characterised in that** the adjacent carrier structure segments (7, 8) of the first wind turbine (3) are constructed in such a manner that they can be directly connected to each other without the intermediate segment (17).

3. Wind turbine group according to claim 2, **characterised in that** the adjacent carrier structure segments (7, 8) of the first wind turbine (3) taper upwards in each case.

4. Wind turbine group according to claim 3, **characterised in that** the intermediate segment (17) extends parallel with the vertical axis (11).

5. Wind turbine group according to any one of the preceding claims, **characterised in that** the carrier structure (6) of the first wind turbine (3) and the intermediate segment (17) in each case comprise a grid or a framework structure.

6. Wind turbine group according to any one of the preceding claims, **characterised in that** the adjacent carrier structure segments (7, 8) of the first wind turbine (3) and the intermediate segment (17) each have a polygonal cross-section.

7. Wind turbine group according to any one of the preceding claims, **characterised in that** the adjacent carrier structure segments (7, 8) of the first wind turbine (3) and the intermediate segment (17) each comprise a plurality of carrier elements (21, 22, 23; 33, 34, 35; 37, 38, 39), wherein the carrier elements (33, 34, 35; 37, 38, 39) of the adjacent carrier structure segments (7, 8) are securely connected to each other with the carrier elements (21, 22, 23) of the intermediate segment (17) being interposed.

8. Wind turbine group according to claim 7, **characterised in that** the carrier elements (21, 22, 23; 33, 34, 35; 37, 38, 29) are in each case constructed in a rod-like or tubular manner.

9. Wind turbine group according to claim 7 or 8, **characterised in that** the carrier elements (33, 34, 35; 37, 38, 29) of the adjacent carrier structure segments (7, 8) extend in an inclined manner relative to the vertical axis (11) and the carrier elements (21, 22, 23) of the intermediate segment (17) extend parallel with the vertical axis (11).

10. Wind turbine group according to any one of the preceding claims, **characterised in that** the group transformer (19) is electrically connected at the secondary side to a high-voltage direct-current transmission device (41).

11. Wind turbine group according to any one of the preceding claims, **characterised in that** the carrier structure (6) of at least a second of the wind turbines (2) is composed of a plurality of carrier structure segments (7, 8) which are arranged one above the other, wherein two adjacent segments of these carrier structure segments (7, 8) are constructed in such a manner that the intermediate segment (17) can be arranged between these carrier structure segments (7, 8).

12. Wind turbine group according to claim 11, **characterised in that** the adjacent carrier structure segments (7, 8) of the second wind turbine (2) are constructed in an identical manner to the adjacent carrier structure segments (7, 8) of the first wind turbine (3).

13. Wind turbine group according to claim 11 or 12, **characterised in that** the adjacent carrier structure segments (7, 8) of the second wind turbine (2) are arranged directly one above the other.

## Revendications

1. Ensemble d'éoliennes avec plusieurs éoliennes (2, 3, 4), qui comprennent chacune un rotor (12) mis en rotation par le vent, au moins un générateur électrique (15) pouvant être entraîné par celui-ci, une structure porteuse (6) supportant le rotor (12) et le générateur (15), qui s'étend dans une direction verticale (11), dans lequel la structure porteuse (6) d'une première des éoliennes (3) est constituée de plusieurs segments de structure porteuse (7, 8) superposés, et un transformateur de groupe électrique (19) qui est relié électriquement du côté primaire avec les générateurs (15) des éoliennes (2, 3, 4), dans lequel le transformateur de groupe (19) est fixé à un segment intermédiaire (17) qui est disposé entre deux segments de structure porteuse (7, 8) adjacents de la première éolienne (3), **caractérisé en ce que** les éoliennes (2, 3, 4) sont disposées en mer et le transformateur de groupe (19) est disposé sur un côté externe du segment intermédiaire (17).

2. Ensemble d'éoliennes selon la revendication 1, **caractérisé en ce que** les segments de structure porteuse adjacents (7, 8) de la première éolienne (3) sont conçus de façon à pouvoir être reliés directement entre eux sans le segment intermédiaire (17).

3. Ensemble d'éoliennes selon la revendication 2, **caractérisé en ce que** les segments de structure porteuse adjacents (7, 8) de la première éolienne (3) se rétrécissent chacun vers le haut.

4. Ensemble d'éoliennes selon la revendication 3, **caractérisé en ce que** le segment intermédiaire (17) s'étend parallèlement à l'axe vertical (11).

5. Ensemble d'éoliennes selon l'une des revendications précédentes, **caractérisé en ce que** la structure porteuse (6) de la première éolienne (3) et le segment intermédiaire (17) comprennent chacun une structure de type grille ou charpente.

6. Ensemble d'éoliennes selon l'une des revendications précédentes, **caractérisé en ce que** les segments de structure porteuse adjacents (7, 8) de la première éolienne (3) et le segment intermédiaire (17) présentent chacun une section transversale polygonale.

7. Ensemble d'éoliennes selon l'une des revendications précédentes, **caractérisé en ce que** les segments de structure porteuse adjacents (7, 8) de la première éolienne (3) et le segment intermédiaire (17) comprennent chacun plusieurs éléments porteurs (21, 22, 23 ; 33, 34, 35 ; 37, 38, 39), dans lequel les éléments porteurs (33, 34, 35 ; 37, 38, 39) des segments de structure porteuse adjacents (7, 8) sont reliés fermement entre eux en intercalant les éléments porteurs (21, 22, 23) du segment intermédiaire (17).

8. Ensemble d'éoliennes selon la revendication 7, **caractérisé en ce que** les éléments porteurs (21, 22, 23 ; 33, 34, 35 ; 37, 38, 39) présentent chacune une forme de tige ou une forme tubulaire.

9. Ensemble d'éoliennes selon la revendication 7 ou 8, **caractérisé en ce que** les éléments porteurs (33, 34, 35 ; 37, 38, 39) des segments de structure porteuse adjacents (7, 8) sont inclinés par rapport à l'axe vertical (11) et les éléments porteurs (21, 22, 23) du segment intermédiaire (17) s'étendent parallèlement à l'axe vertical (11).

10. Ensemble d'éoliennes selon l'une des revendications précédentes, **caractérisé en ce que** le transformateur de groupe (19) est relié électriquement, côté secondaire, avec un dispositif de transmission de courant continu à haute tension (41).

11. Ensemble d'éoliennes selon l'une des revendications précédentes, **caractérisé en ce que** la structure porteuse (6) est constituée d'au moins une deuxième des éoliennes (2) constituée de plusieurs segments de structure porteuse superposés (7, 8), dans lequel deux-trois segments adjacents de ces segments de structure porteuse (7, 8) sont conçus de façon à ce que le segment intermédiaire (17) puisse être disposé entre ces segments de structure porteuse (7, 8).

12. Ensemble d'éoliennes selon la revendication 11, **caractérisé en ce que** les segments de structure porteuse adjacents (7, 8) de la deuxième éolienne (2) sont conçus de la même manière que les segments de structure porteuse adjacents (7, 8) de la première éolienne (3).

13. Ensemble d'éoliennes selon la revendication 11, **caractérisé en ce que** les segments de structure porteuse adjacents (7, 8) de la deuxième éolienne (2) sont superposés directement.
